# EUROPEAN PATENT SPECIFICATION

(11) **EP 0 738 247 B1**
(45) Date of publication and mention of the grant of the patent: **20.05.1998**
(21) Application number: 94918618.3
(22) Date of filing: 08.06.1994
(51) Int. Cl.: C05F 17/02

(54) **COMPOSTING CONTAINER**
KOMPOSTIERBEHÄLTER
RECIPIENT DE COMPOSTAGE

(30) Priority: 09.06.1993 NO 932090; 16.12.1993 NO 934662
(43) Date of publication of application: 23.10.1996
(73) Proprietor: Reincke, Carl, Johan, N-1440 Drobak (NO)
(72) Inventor: Reincke, Carl, Johan, N-1440 Drobak (NO)
(74) Representative: Hynell, Magnus
(86) International application number: NO9400105
(87) International publication number: WO9429241

(56) References cited:
- EP-A- 0 585 666
- DE-A- 4 239 191

## Description

The present invention concerns a container for composting organic waste and especially for rapid composting of small amounts of organic waste material such as garden and household waste.

The waste is introduced at the top of the composting container and will ooze downwards. Composted converted waste in the form of a relatively dry biomass is removed through a hatch near the bottom of the container. In addition water which is separated during the composting process is collected in the bottom of the composting container. This water can be used as a liquid fertilizer.

Aerobic composting is used for composting the organic waste. Aerobic composting takes place by means of the addition of oxygen and is usually odourless. During the conversion the aerobic bacteria develop higher temperatures than the anaerobic bacteria which are developed when there is a deficiency of oxygen and which provide a rotting process which emits gases with a strong and unpleasant odour.

From Norwegian patent no. 146 595 there is known a method and a device for continuous composting of organic waste in larger amounts. The composting device is designed with a great deal of supplementary equipment which is necessary in order to maintain a continuous process.

The object of the present invention is to obtain a device for continuous composting of organic waste in small amounts. This task is solved according to the invention by means of a composting device which has a simple construction and is easy to maintain and which is characterized by the features which are specified in the claim.

By composting in the composting container according to the invention a rapid composting of the organic waste is obtained. A throughput time of approximately 3 weeks is possible when the process is performed according to the following conditions:
- The waste is ground/milled down to a particle size of approximately 5 mm.
- The waste should be damp and contain approximately 60% of water.
- The waste is mixed with carbonaceous material in the form of bark, grass, straw, plant waste or wood chips, thus obtaining a carbon/nitrogen ratio of approximately 30:1. A nitrogen bond is thus obtained in the composted waste, thus preventing the nitrogen from being converted to gas and escaping.
- Aerobic composting requires the supply of air, and in order to guarantee a good flow of air through the waste in the composting container granulates or granular material such as leca granulates or plastic balls are added.
- In order to achieve an even composting process the waste should be added to the composting container in relatively large volumes and at regular intervals such as once per week.

The process of composting or breaking down the waste emits heat and the temperature is crucial to the process. A favourable temperature for the process is from approximately 60° to 65°C, and thus it is important for the composting container to be adequately insulated, thus enabling the waste mass to reach this temperature. If the temperature exceeds approximately 67°C, the decomposition process stops since the bacteria die.

During the process there is a reduction in the volume of the waste since the moisture is expelled in the form of water and water vapour. Gas is expelled in the form of carbon dioxide. The water will percolate through the converted waste and will dissolve organic substances. This composting water is collected in the bottom of the composting container and can be drained off and used as a liquid fertilizer. The surprising discovery has been made that the liquid is neutral with a pH value close to 7.

In order to start up the composting process and to maintain it three factors are crucial to the process. The waste must have sufficient moisture. The correct amount of oxygen in the form of air must be added to the waste. The waste must have a certain temperature and the temperature must be maintained during the process.

Organic waste is introduced from above into the composting container according to the invention and will ooze downwards. The container is conical in shape with the diameter increasing towards the bottom, thus enabling the mass to slide automatically downwards and avoiding blockage. This avoids the necessity of staking which will disturb the composting process.

Air is introduced near the bottom of the container and distributed over the entire cross section, thus ensuring that the waste mass is supplied with the correct amount of oxygen in the form of air which will flow upwards through the waste.

During the process of composting and breaking down of the organic waste, heat is developed and the temperature in the upper part of the container is higher than in the lower part. The composting container is adequately insulated, thus ensuring a low heat loss.

The decomposition process is dependent on the temperature since the aerobic bacteria are developed more rapidly the higher the temperature, up to approximately 67°C. It is also important for the composting process that the waste reaches a high temperature, preferably 65°C, as quickly as possible. By supplying preheated air the temperature in the waste mass can be caused to rise rapidly and reach high values.

The air can be preheated by taking in air at the top of the composting container and causing it to pass in pipes which are located along the inside of the container, the air thus being heated by the heat of the composting mass. Temperatures of approximately 50°C have been measured in the preheated air which flows out through the supply pipe near the bottom of the container.

By having the air preheated by the heat created during the decomposition process, an improved heating economy and a faster composting process are achieved since a larger volume of the waste mass reaches a high temperature.

A simplification of the composting container is achieved by avoiding the use of electrical heating elements or heat exchangers for preheating the air. This is one of the advantages of the invention.

In known composting containers moisture is supplied to the waste by injecting atomized air from special water containers through separate supply pipes or adding it to the air which is injected.

In other known containers the water which evaporates and is condensed on the bottom of the container lid is directed against the sides and passed down along the walls of the container. Out on the sides of the container there is usually already a sufficiently high degree of humidity to give a surplus of water and wet pockets are formed to which oxygen cannot gain access. In these wet pockets anaerobic composting occurs in which gases are created with a strong and unpleasant odour.

The innovative feature of the invention is the recirculation of the water in the waste. At the relatively high temperature of approximately 60°-65°C which is created during the composting process, a great deal of the water will evaporate. By allowing the water which is evaporated to be condensed on the bottom of the container's lid and by designing the container lid with one or more condensate collecting edges near the centre the water will be caused to drip back into the composting mass, thus obtaining an even degree of humidity in the waste, especially in the central section of the composting container where the temperature is normally from 5 to 10 degrees higher than out along the sides. For this reason there is also greater evaporation in the central section, thus causing dry zones to occur where the composting process comes to a stop. In order to achieve an even composting in a relatively small container, therefore, it is vital to supply water to the central section of the container.

The gas which is formed during the decomposition of the waste will cause an overpressure in the composting container. In the centre of the lid a filter is located through which the gas can escape. The filter can be an active carbon filter which will remove any unpleasant odour in the gas.

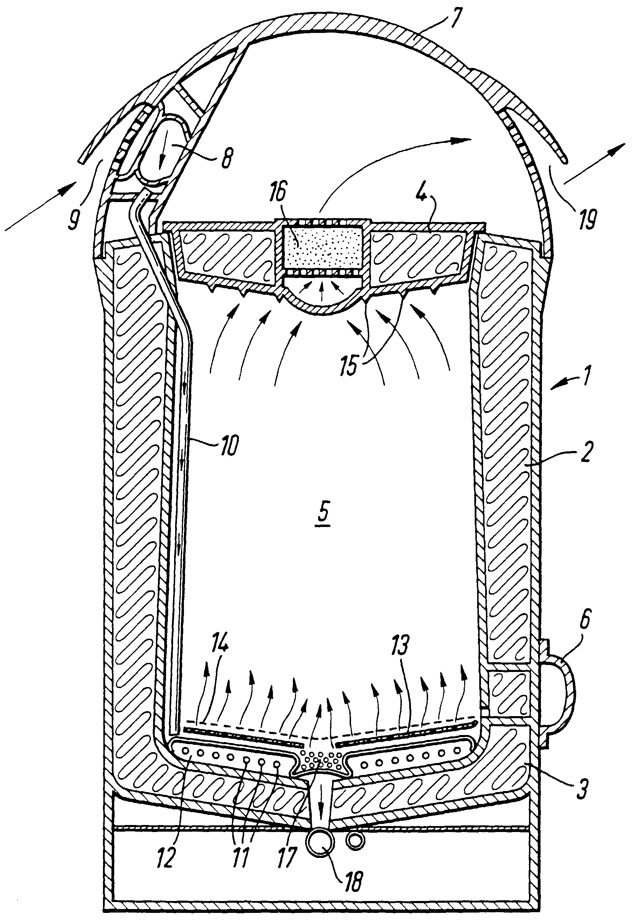

The invention will now be explained in more detail with reference to the drawing, which consists of a single figure illustrating an embodiment of the invention.

The figure illustrates a section of the composting container which is indicated by 1. The container has heat-insulating walls 2 and a heat-insulating bottom 3. The container 1 is equipped with a heat-insulating lid 4 whereby the waste can be fed into the container compartment 5 and a heat-insulated hatch 6 from which composted biomass can be removed. In order to ensure that the composting process starts and is maintained a certain amount of waste must be present, the container compartment 5 thus requiring to have a certain volume which preferably should not be less than approximately 100 litres.

The container 1 is equipped with an external uninsulated lid 7. An air pump 8 is installed on the bottom of the external lid 7 and draws in fresh air through an air intake 9. The air is passed through a pipe 10 which is installed on the inside of internal container wall 2 from the top to the bottom 3 of the container compartment 5. Here the pipe 10 will be heated by the warm compost material in the compartment 5. Over the bottom 3 of the container 1 the air pipe 11 is designed in a spiral shape and provided with several holes of small diameter which are distributed in such a manner that an even distribution of the air is obtained over the entire cross section of the composting compartment 5.

In order to prevent the holes in the air pipe 11 from being clogged by water which percolates down from the waste and collects over the bottom 3, the air pipe 11 is located at a certain distance from the bottom 3. The air pipe 11 is mounted in grooves or threaded through holes in three or more brackets 12 which are attached to the bottom of the container 1. Over the brackets is located a perforated plate 13 which acts as an internal bottom plate in the container compartment 5. The perforation is evenly distributed over the plate and will lead air up to the container compartment 5 while simultaneously channelling water from the waste, thus enabling it to be passed out through an outlet pipe 18 located in the bottom of the container 1. The perforation is preferably designed in such a manner that the holes in the plate 13 are located between the windings in the air pipe 11 which is twisted like a spiral. Water is thereby prevented from dripping directly on to the air pipe 11. The internal bottom plate 13 can be designed with ridges or grooves 14 in order to prevent the biomass from clogging the holes through the plate. The grooves can also be designed in a fan shape, thus causing them to radiate from the discharge opening 6, and facilitating the removal of the biomass. The internal bottom plate 13 can also be mounted obliquely in relation to the horizontal at a certain angle, thus causing it to slope towards the discharge opening 6. This will also facilitate the removal of the biomass from the container compartment 5.

In the space between the internal bottom plate 13 and the bottom 3 of the container 1 there are located balls or rings 17, e.g. of plastic, glass or ceramics. The balls 17 will distribute the pressure from the biomass to the bottom 3. The balls 17 are also intended to channel the water which percolates from the waste round the air pipe 11.

The bottom of the lid 4 has a slightly conical shape towards the centre and is designed with one or more condensate collecting edges or drip 15. In the centre the lid 4 has a discharge opening for gas which is formed during the composting and a replaceable filter 16 can be located here. The gas will then pass out into the open air through a discharge opening 19.

## Claims

1. A device for composting organic waste in small amounts, comprising:
a heat-insulating container (1) designed in a cylindrical shape and conical with an increasing diameter towards the bottom (3),
with a removable heat-insulating lid (4) on the top, and a heat-insulated hatch (6) for the removal of mass over the bottom,
with the supply of air to the bottom of the container by means of an air pump (8), a supply pipe (10) and a perforated pipe (11) located in concentric rings over the bottom plate, **characterized** in that
the air pump (8) is located near the top of the container (1) and that the air supply pipe (10) is located along the inside of the container, thus causing the air to be heated by the warm compost mass,
the lid (4) is designed with a conical bottom with one or more condensate collecting edges or drip (15) located near the centre of the lid (4), in the centre of the lid (4) there is located a replaceable filter (16) for cleaning waste gases,
and the bottom (3) of the container is conical in shape with a drainage pipe (18), a perforated plate (13) being located over the bottom (3) and the space between the plate (13) and the bottom (3) where the perforated pipe is located being filled with glass balls (17).

## Patentansprüche

1. Einrichtung zur Kompostierung von organischem Abfall in geringen Mengen, welche Einrichtung aus einem wärmeisolierenden Behälter (1) umfasst, der in einer zylindrischen Form und konisch mit einem zunehmenden Durchmesser gegen den Boden (3) ausgestaltet ist, besteht, wobei der Behälter oben mit einem wärmeisolierenden Deckel (4) und einer wärmeisolierenden Ausstiegluke (6) zur Abziehen von Masse über den Boden versehen ist, wobei die Zufuhrung von Luft zum Behälterboden durch eine Luftpumpe (8), eine Zuführungsleitung (10) und eine perforierte Leitung (11), die in konzentrische Ringen über die Grundplatte eingerichtet ist, durchgeführt wird,
**dadurch gekennzeichnet**, dass die Luftpumpe (8) in der Nahe des oberen Ende des Behälters (1) angebracht ist, und dass die Luftzuführungsleitung (10) längs der Innenseite des Behälters eingerichtet ist, wodurch die Luft durch die Kompostmasse aufgewärmt wird, dass der Deckel (4) mit einem konischen Boden mit einer oder mehreren Kondensatsamlungskanten oder Wasserablaufrinnen (15) nahe der Mitte des Deckels (4) versehen ist, dass ein austauschbares Filter (16) zur Reinigung der Abfallgasen in der Mitte des Deckels (4) angebracht ist, und dass der Boden (3) des Behälters eine konische Form mit einer Dränungsleitung (18) hat, dass eine perforierte Platte (13), über dem Boden (3) angebracht ist und der Raum zwischen der Platte (13) und dem Boden (3), wo die perforierte Leitung (11) angeordnet ist, mit Glaskugeln (17) gefüllt ist.

## Revendications

1. Un appareil pour le compostage de déchets organiques en petites quantités et comprenant:
un récipient calorifugé (1) de forme cylindrique et conique, à diamètre augmentant vers le bas (3),
avec, à son sommet, un couvercle calorifugé mobile (4), et un panneau ouvrant calorifugé (6) pour l'enlèvement de la masse reposant au fond,
avec l'alimentation d'air du fond du récipient par l'intermédiaire d'une pompe à air (8), d'un tuyau d'alimentation (10) et d'un tuyau perforé (11) disposé en anneaux concentriques sur la plaque de fond, appareil caractérisé par le fait que
la pompe à air (8) est située près du sommet du récipient (1) et que le tuyau d'alimentation d'air (10) est disposé le long de la paroi interne du récipient, ce qui fait que l'air est réchauffé par la chaleur du compost,
le couvercle (4) est à fond conique, avec une ou plusieurs arêtes ou nez d'égouttement pour condensats (15) situés près du centre du couvercle (4),
au centre du couvercle (4) est disposé un filtre remplaçable (16) pour l'épuration des gaz perdus,
et le fond (3) du récipient est de forme conique, avec un tuyau de vidange (18), une plaque perforée (13) étant disposée au-dessus du fond (3), et l'espace entre la plaque (13) et le fond (3) où est logé le tuyau perforé (11) étant rempli de billes de verre (17).
